# EUROPEAN PATENT APPLICATION

(11) **EP 4 641 412 A1**
(43) Date of publication of application: **29.10.2025**
(21) Application number: 25171484.6
(22) Date of filing: 18.04.2025
(51) Int. Cl.: G06F 21/10, G06F 21/53, G06F 21/57, G06F 21/60, H04L 9/40, H04W 12/10

(54) **GROUPED FIRMWARE DESIGN FOR MEMORY CONSTRAINED DEVICES**

(30) Priority: 25.04.2024 IN 202441032717
(71) Applicant: NXP USA, Inc., Austin, TX 78735 (US)
(72) Inventor: Khattar, Sushant, 5656Ag Eindhoven (NL); Kumari, Shreya, 5656AG Eindhoven (NL); Sun, Yusong, 5656AG Eindhoven (NL); Gupta, Megha, 5656AG Eindhoven (NL)
(74) Representative: Miles, John Richard

(57) **Abstract**

A system, method, and apparatus are provided for securely controlling operations of a data processing system in which security subsystem is activated to provide security services. Initially, a security firmware base code group and a security firmware first code group are downloaded from a multi-group security firmware image stored on external memory for storage at a secure memory in the security subsystem. If the security firmware first code group does not support a received security service command request, a security firmware second code group is retrieved from the multi-group security firmware image a run-time swap of the security firmware second code group is performed to replace the security firmware first code group in the secure memory in the security subsystem so that the security subsystem can generate a response to the security service command request using at least the security firmware second code group.

## Description

### BACKGROUND OF THE INVENTION

### Field of the Invention

The present disclosure is directed in general to the field of data processing. In one aspect, the present disclosure relates to a system for loading firmware from read only memory into secure memory in a data processing system.

### Description of the Related Art

Data processing systems, such as system-on-a-chip (SoC) integrated circuit (IC) systems, use firmware as a specific class of computer software that provides basic functional control for device hardware or functions, and may provide hardware abstraction services to higher-level software such as operating systems. The fact that firmware sits below software makes it difficult to properly secure. And the fact that firmware is typically stored in non-volatile memory devices (such as ROM, EPROM, EEPROM, and flash memory) makes it difficult to update firmware without physically replacing the ROM integrated circuits or reprogramming EPROM or flash memory through a special procedure. Some firmware memory devices are permanently installed and cannot be changed after manufacture. However, it is often necessary to update firmware to fix bugs or add features. Another and closely related problem with firmware operation is that the firmware instructions are too large to fit within an internal memory, such as a secure memory used by a hardware security engine. For example, users of security firmware loaded onto the secure memory of a hardware security engine may issue commands or requests for new features that are not supported by the security firmware. If there were no constraints on the size of secure memory, then the new features could simply be added by loading into secure memory an updated security firmware which is configured to handle the new and existing features. However, with secure memory having a fixed size, there are physical limits on the ability of the secure memory to accommodate security firmware code that addresses new features. Indeed, in the foreseeable future, the collection of new features will exceed the existing code space limitations of existing secure memory which is insufficient to store a single image format to meet future requirements. While demand paging solutions have been developed to load application images with separate pages on demand, such solutions require the creation of page tables which are costly and difficult to maintain, especially with embedded systems where the size of application/firmware/code can vary up to large sizes. As seen from the foregoing, the existing firmware solutions for meeting the demand of new features while maintaining scalability and also ensuring the confidentiality and authenticity of the code are extremely difficult at a practical level by virtue of the challenges with meeting the performance requirements and cost constraints for securely providing data processing system functionality that is flexible, yet secure, with low overhead and cost.

### BRIEF DESCRIPTION OF THE DRAWINGS

The present invention may be understood, and its numerous objects, features and advantages obtained, when the following detailed description of a preferred embodiment is considered in conjunction with the following drawings.
Figure 1 depicts a simplified top-level system view of a data processing system having a security subsystem which provides a grouped firmware design for memory-constrained devices in accordance with selected embodiments of the present disclosure.
Figure 2 depicts a simplified block diagram illustration of a cipher-based Message Authentication Coding (CMAC) technique for securely constructing the multi-group security firmware image in accordance with selected embodiments of the present disclosure.
Figure 3 depicts a simplified block diagram illustrating the runtime group loading from external flash memory to secure on-board memory in accordance with selected embodiments of the present disclosure.
Figure 4 depicts an example logic flow diagram illustrating selective loading of grouped firmware onto a memory-constrained device in accordance with selected embodiments of the present disclosure.

### DETAILED DESCRIPTION

An apparatus, system, architecture, methodology, and program code are described for an integrated circuit computer system -- such as electronic control units (ECUs), microcontrollers (MCUs), power train control modules (PCM), System(s)-on-a-Chip (SoC), and System(s)-in-a-Package (SiP) - which allows dynamic and secure adjustment of firmware functionality loaded into secure memory of a hardware security engine at any given time. In selected embodiments, the integrated circuit computer system includes a security subsystem having control logic, secure memory, and processor resources which interact with grouped firmware stored on external flash memory to securely load a base code group with an initial code group from external flash memory to the secure memory of the security subsystem, and to then swap out the initial code group with one or more separately defined code groups as required to meet command request requirements. By storing a single grouped firmware image in external flash memory which includes the base code group, initial code group, and one or more separately defined code groups in encrypted form along with an initialization vector (IV) and one or more integrity check values, an image manager at the hardware security engine may be executed to ensure the integrity and authenticity of the base code group, initial code group, and one or more separately defined code groups as they are loaded into secure memory in response to requested commands. In particular, the base code group and initial code group may be initially loaded into secure memory using an initial authentication and decryption processing step, where the decrypted base group includes an image manager and a predetermined set of minimum firmware features, and where the initial code group contains a predetermined set of frequently used features. Once the image manager is loaded, it evaluates any requested command against the available features of the initial code group stored in secure memory. If the requested command can be serviced by the available features of the initial code group, then the hardware security engine processes the requested command. However, if there is not a match with the available features, then the image manager performs a run-time swapping to replace the initial code group with the one or more separately defined code groups into secure memory, depending on which code group meets the requested command. As a result, the system with a memory constrained secure memory can continuously operate with the single grouped firmware image stored in external flash memory by using the image manager to identify which code group meets the requested commands and then selectively load the identified code group into the smaller secure memory after ensuring the confidentiality and authenticity of the identified code group.

As described hereinbelow, the disclosed embodiments can be arranged and designed in a wide variety of different configurations. Thus, the following detailed description of various embodiments, as represented in the figures, is not intended to limit the scope of the present disclosure, but is merely representative of various embodiments. While the various aspects of the embodiments are presented in drawings, the drawings are not necessarily drawn to scale unless specifically indicated. Furthermore, the described features, advantages, and characteristics of the invention may be combined in any suitable manner in one or more embodiments. One skilled in the relevant art will recognize, in light of the description herein, that the embodiments can be practiced without one or more of the specific features or advantages of a particular embodiment. In other instances, additional features and advantages may be recognized in certain embodiments that may not be present in all embodiments. In addition, it will be appreciated that the techniques described herein can be applied to any type of computer network system, including but not limited to computer systems connected in an in-vehicle network (IVN), Controller Area Network (CAN), a Local Interconnect Network (LIN), an Ethernet network, and the like.

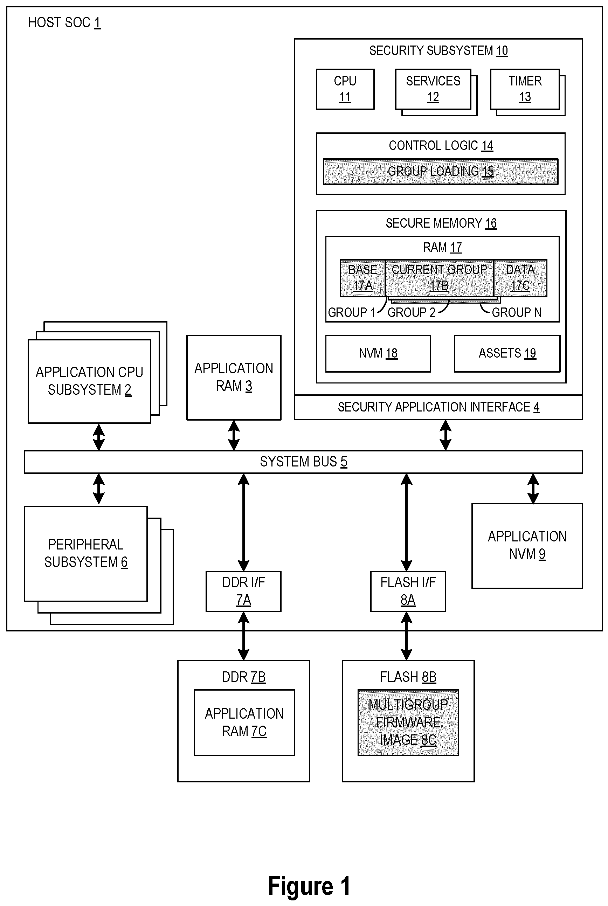

To provide additional details for an improved contextual understanding of the present disclosure, reference is now made to Figure 1 which depicts a simplified top-level system view of a data processing system on a chip (SoC) 1 which includes an application domain and a security domain. The application domain is implemented by the accumulated processor functions and resources 2-9, including one or more application central processing unit (CPU) subsystems 2 and an application random access memory (RAM) 3 connected over a communication or system bus 5 to a security subsystem interface 4, one or more peripheral subsystems 6, external memory interfaces (e.g., DDR I/F 7A or Flash I/F 8A), and application non-volatile memory (NVM) 9. In addition, the security domain is implemented by the security subsystem 10 which communicates with the application domain via the security subsystem interface 4. In selected embodiments, the security subsystem 10 may be a Cryptographic Services Engine (CSE) subsystem which has its own exclusive system resources 11-19 and connects to the host application CPU subsystem(s) 2 via the security subsystem interface 4. In turn, the external memory interfaces may be connected to external memory, such as DDR memory 7B (for storing application RAM 7C) or flash memory 8B (for storing a multi-group firmware image 8C). Each SoC subsystem block is bi-directionally connected to the system bus 5. In one embodiment, the data processing SoC 1 may be implemented as circuitry on a single integrated circuit. In addition, the system bus 5 can be any type of bus structure, including but not limited to an advanced high-performance bus (AHB) or an advanced peripheral bus (APB). In addition, the application CPU subsystem(s) 2 may be any type of processing circuit, including but not limited to a microprocessor (MPU), microcontroller (MCU), digital signal processor (DSP), or another type of processor or processor core. Though not shown, the data processing SoC 1 may include peripheral devices or special-purpose processors used to control peripheral units, such as for example, a direct memory access (DMA) peripheral, communication interfaces, timers, encoders/decoders, etc.

As described more fully hereinbelow, the depicted security subsystem 10 may be embodied as a subsystem within the data processing SoC 1, but it may instead be embodied as a standalone microprocessor. However embodied, the security subsystem 10 may be implemented as a deterministic hardware state machine or a composition of software and hardware (e.g., firmware) executing on one or more dedicated CPU cores 11 to implement control logic 14 to govern overall system security by providing, *inter alia,* a group loading or image manager 15 for loading a size-constrained memory on the data processing SoC 1, such as the secure memory 16, by dynamically swapping out code blocks from external flash memory 8B for loading into secure memory 16. To this end, the depicted security subsystem 10 may include security subsystem resources -- such as a CPU 11, services 12, timer 13, control logic 14, and a dedicated secure memory 16 which is inaccessible from the application domain - which are configured to ensure the integrity and authenticity of operations of the application CPU subsystem 2, such as by providing security service functionality 12 to one or more application CPU subsystems 2 which interface with the security subsystem 10 through one or more communication channels, such as the system bus 5, registers or memory (e.g., RAM 3). As a subset of its security service functionality, the security subsystem 10 may be configured to provide access to security services 12 by an application CPU subsystem 2 residing outside the scope of the security subsystem 10. Such security service may, for example, be a cryptographic operation conducted by the security engine on an application-provided ciphertext or plaintext and using a cryptographic key. Another security service functionality provided by the security services 12 is to protect security related assets 19, such as cryptographic keys used with the security service operation. Another security service functionality provided by the security services 12 is a system control functionality for controlling the application CPU subsystem(s) 2, such as resetting select application processors 2, controlling access to peripherals 6, controlling memory access policies, and resetting or pausing select application cores at each application CPU subsystem 2.

In accordance with the present disclosure, the control logic 14 may be configured with the group loading module 15 to securely load selected blocks of the multi-group firmware image 8C from external flash memory 8B into the secure memory 16, thereby providing security firmware with features to meet the command features or functions required by the data processing SoC 1. To this end, the group loading module 15 processes the multi-group firmware image 8C stored external flash memory 8B to authenticate a base code group and initial code group (Group 1) using an initial Integrity Check Value (ICV) before decrypting and downloading or transferring the decrypted base code group and initial code group for storage in the secure memory 16. Given the size constraints of the secure memory 16 which may not be sufficient to store the entirety of the multi-group firmware image 8C, the disclosed technique for loading only selected code groups of the multi-group firmware image 8C means that the required functionality of the security firmware from the multi-group firmware image 8C can be downloaded to the secure memory 16, and then replaced or updated with one or more additional code groups when required by command requests that cannot be serviced by the code group currently stored in the secure memory 16.

In an example embodiment, the secure memory 16 may include a random access memory (RAM) storage 17 having a secure memory layout which is initially loaded during startup or reset with a base group segment 17A, current group segment 17B, and a data segment 17C in a continuous memory address space. For example, the group loading module 15 may initially authenticate and decrypt an encrypted base code group and an encrypted initial code group (e.g., Group 1) from the multi-group firmware image 8C stored in external flash memory 8B, and then download or transfer the decrypted groups for storage as unencrypted plaintext into the RAM 17 in the base group segment 17A, current group segment 17B, and a data segment 17C. The decrypted base code group 17A includes an image manager and a specified set of minimum common features for start-up code and specified utility functions, such as Advanced Encryption Standard (AES) Electronic Code Book (ECB)/Cipher Block Chaining (CBC), AES Cipher-based Message Authentication Coding (CMAC), true random number generator (TRNG), pseudo random number generator (PRNG), secure boot, vector table, and an exception handler. In addition, the decrypted current code group block 17B includes a specified set of commonly-used functionalities or features, such as a load key, export key, AES Counter Mode (CTR), and an AES Galois/Counter Mode (GCM). The decoded and downloaded base code group and initial code group (Group 1) may also include a look-up table that is stored in the secure memory 16 for use in performing command-to-group mapping.

Once the base code group and initial code group are loaded into secure memory 16, the security subsystem 10 commences normal operations by issuing one or more commands to the security firmware stored or loaded in secure memory 16. As each command is received, the group loading module 15 checks if the RAM 17 is loaded with a code group that can execute the command, such as by accessing the command-to-group mapping look-up table that is stored in secure memory 16. If a currently loaded code group can service the command, then the command is executed and a response is provided. However, if a currently loaded code group cannot service the command, then the image manager initiates a group swapping process to identify, authenticate, decrypt and download a second, different code group (e.g., Group 2) from the multi-group firmware image 8C which replaces the current code group stored in the current code group segment 17B. To ensure the integrity of the second code group, an ICV value of the second code group is calculated using an internal authentication key, and then compared to an ICV value stored in the secure memory 16. If the ICV values match, the second code group (e.g., Group 2) is loaded in-place as decrypted plaintext in the decrypted current code group block 17B, and the pending command is executed and a response is provided. At this point, a tracking variable for the currently loaded group is set to group index value corresponding to the second code group.

In operation, application firmware executed by the application CPU subsystem 2 must first be properly authorized before being granted access to services 12 of the security subsystem 10 and/or before being allowed use of cryptograph assets, such as keys stored in the secure memory 16. In other words, the application firmware is verified for authenticity prior to its execution by an application processor using a process commonly referred to as a "secure boot" process which is understood as the process to ensure the integrity and authenticity of one or several application images being executed by one or several application CPU subsystems 2 within the application domain. Accordingly, the security subsystem 10 is the first and only subsystem to start after system reset using startup code that is immutable software to initialize the security subsystem 10 and to run the startup flow. After retrieving a startup configuration, a conventional startup code would load a security firmware image from nonvolatile memory (e.g., Flash 8B) to RAM 17 as an executable that runs in the security subsystem 10, where the security firmware image is an encrypted and authenticated data set that contains the security subsystem security assets and configuration and that is used by the security subsystem 10 (i.e., the CSE firmware). The security firmware image is then decrypted and verified prior to continuing with the startup flow. However, because of size constraints of the secure memory 16 and the inability of a fixed security firmware to support new features, such conventional approaches for loading a single, fixed security firmware image from nonvolatile memory are not able to accommodate newer, larger security firmware code.

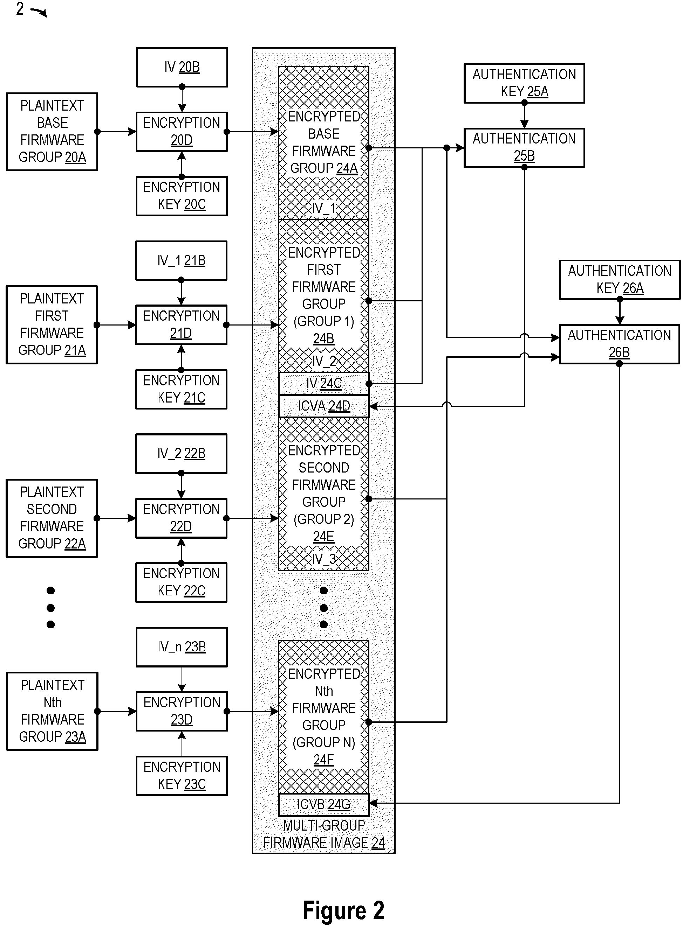

To provide additional details for an improved understanding of an example secure procedure for constructing and using a multi-group security firmware image, reference is now made to Figure 2 is a simplified block diagram 2 illustration of a Cipher-based Message Authentication Coding (CMAC) technique for securely constructing the multi-group security firmware image 24 in accordance with selected embodiments of the present disclosure. In general terms, a plurality of plaintext firmware groups 20A, 21A, 22A, 23A are each processed to form encrypted firmware groups 24A, 24B, 24E, 24F using respective initialization vector (IV) values 20B, 21B, 22B, 23B and encryption key values 20C, 21C, 22C, 23C, and then the encrypted firmware groups 24A, 24B, 24E, 24F are chained together using a first (unencrypted) IV value and a plurality of (unencrypted) Integrity Check Values (e.g., ICVA, IVCB) to form the multi-group security firmware image 24 with a file structure which enables the initial loading of the base and first firmware groups into secure memory and subsequent run-time swapping of a second firmware group to replace the first firmware group in secure memory.

In particular, the base firmware group 20A is supplied as plaintext to an encryption module 20D (e.g., an AES encryption module) which generates the encrypted base firmware group 24A based on the encryption key 20C and the first initialization vector value IV 20B as an initial (non-secret) value for the encryption algorithm. In addition, the first (initial) firmware group 21A is supplied as plaintext to an encryption module 21D (e.g., an AES encryption module) which generates the encrypted first firmware group 24B based on the encryption key 21C and the second initialization vector value IV_1 21B which is computed as the last block of the encrypted base firmware group 24A, thereby chaining the encrypted base firmware group 24A to the encrypted first firmware group 24B. In similar fashion, the second firmware group 22A is supplied as plaintext to an encryption module 22D (e.g., an AES encryption module) which generates the encrypted second firmware group 24E based on the encryption key 22C and the third initialization vector value IV_2 21B which is computed as the last block of the encrypted first firmware group 24B, thereby chaining the encrypted first firmware group 24B to the encrypted second firmware group 24E. And the generation of encrypted firmware groups continues until the Nth firmware group 23A is supplied as plaintext to an encryption module 23D (e.g., an AES encryption module) which generates the Nth encrypted firmware group 24F based on the encryption key 23C and the Nth initialization vector value IV_n 23B which is computed as the last block of the (N-1)th encrypted firmware group, thereby chaining the encrypted (N-1)th firmware group to the encrypted Nth firmware group 24F. As a result of using the initialization vector (IV) values 20B, 21B, 22B, 23B, the plaintext firmware groups 20A, 21A, 22A, 23A are all chained together by using a single calculation when forming the encrypted firmware groups 24A, 24B, 24E, 24F.

Instead of appending the encrypted firmware groups 24A, 24B, 24E, 24F together in a contiguous firmware image, they may be constructed in a file structure to facilitate the initial loading of the base and first firmware groups 24A, 24B into secure memory and subsequent run-time swapping of a second firmware group (e.g., 24E) to replace the first firmware group 24B in secure memory. In particular, the encrypted base firmware group 24A and encrypted first firmware group 24B may be chained directly together in sequence with the first initialization vector value IV 24C and a first integrity check value ICVA 24D. In this configuration, the first integrity check value ICVA 24D is computed by supplying the encrypted base firmware group 24A, encrypted first firmware group 24B, and first initialization vector value IV 24C to an authentication module 25B which generates the first integrity check value IVCA 24D based on the authentication key 25A. In addition, each additional firmware group (e.g., the encrypted second firmware group 24E through the encrypted Nth firmware group 24F) are chained directly together in sequence between the first integrity check value ICVA 24D and a second integrity check value ICVB 24G. In this configuration, the second integrity check value ICVB 24G is computed by supplying the encrypted base firmware group 24A, encrypted first firmware group 24B, first initialization vector value IV 24C, and the encrypted second firmware group 24E through the encrypted Nth firmware group 24F to an authentication module 26B which generates the second integrity check value ICVB 24G on the authentication key 26A. As a result of the encryption and authentication calculations, the multi-group firmware image 24 is constructed to sequentially include the encrypted base firmware group 24A, encrypted first firmware group 24B, first initialization vector value IV 24C, the first integrity check value ICVA 24D, encrypted second-Nth firmware group(s) 24E, 24F, and the second integrity check value ICVB 24G.

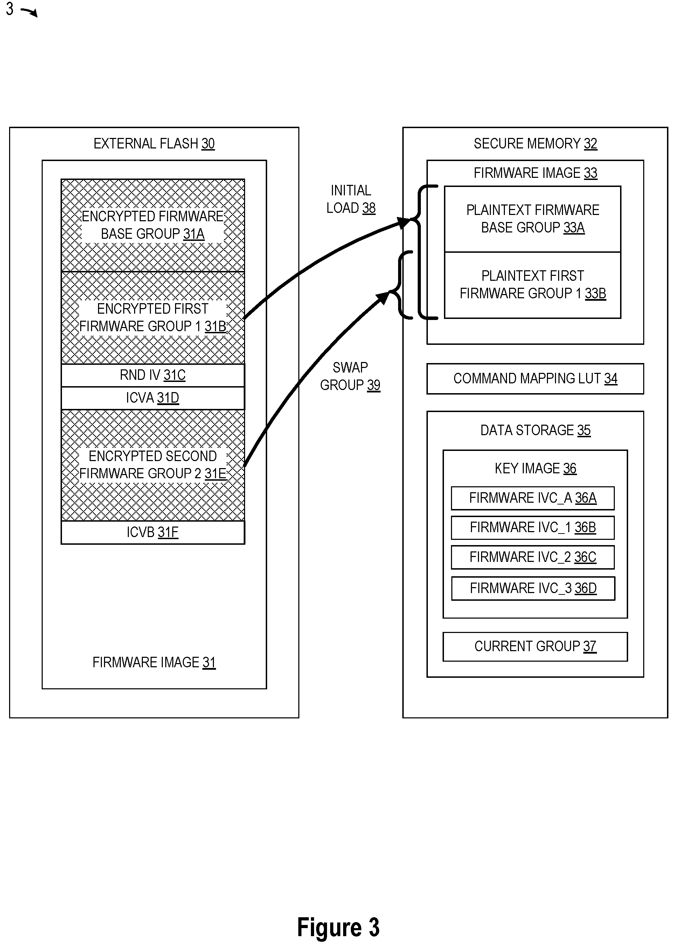

To provide additional details for an improved understanding of an example secure procedure for selectively loading firmware groups from a multi-group security firmware image to a smaller secure memory, reference is now made to Figure 3 which depicts a simplified block diagram illustration of the runtime group loading of security firmware code groups or blocks from external flash memory 30 to secure on-board memory 32 in accordance with selected embodiments of the present disclosure. As depicted, the external flash memory 30 stores a multi-group firmware image 31 which is structured as a binary file to include a chained sequence of an encrypted firmware base group 31A and encrypted first firmware group 31B, first initialization vector value RND IV 31C, a first integrity check value ICVA 31D, at least an encrypted second firmware group 31E, and a second integrity check value ICVB 31F. As indicated, the firmware groups 31A, 31B, 31E are each encrypted, but the first initialization vector value RND IV 31C, first integrity check value ICVA 31D, and second integrity check value ICVB 31F are each stored as plaintext. To provide a baseline of firmware functionality, the encrypted firmware base group 31A and encrypted first firmware group 31B cover the most commonly-used functionalities, while the encrypted second firmware group 31E may cover new, less common, or additional features that are not covered by the encrypted first firmware group 31B, but that may be swapped out to replace the encrypted first firmware group 31B when needed by security firmware command requests.

For example, the encrypted firmware base group 31A may include an image manager and a specified set of minimum common features, such as AES ECB/CBC, AES CMAC, TRNG, PRNG, secure boot, vector table, exception handler, start-up code, and utility functions. In addition, the encrypted first firmware group 31B may include a first specified set of the most frequently used features, such as load key, export key, load plain key, firmware update, AES counter, and AES GCM. In addition, the encrypted second firmware group 31E may include a second specified set of less-frequently used features, such as a SHA2-256, Hash-based Message Authentication Code (HMAC), Password-Based Key Derivation Function 2 (PBKDF2), INSTALL_RSA_PUBLIC_KEY and VERIFY_SIGNATURE commands. In addition or in the alternative, the second firmware group 31E may include elliptic curve cryptography (ECC) primitives.

As an initial load step 38 that occurs at startup or reset, application startup code executed by the CPU subsystem is configured by default to authenticate and decrypt the encrypted base group 31A and first firmware group 31B from firmware image 31 at external flash memory 30. In addition, the decrypted base group 31A and first firmware group 31B are downloaded or transferred to the secure memory 32 for storage in the firmware image 33 as plaintext firmware base group 33A and plaintext first firmware group 33B. The downloaded firmware groups 33A, 33B are stored as a firmware image 33 in the secure memory 32. In addition, the initial load step 38 may store or update a command-to-group mapping look-up table (LUT) 34 which is maintained in secure memory 33 for purposes of matching requested firmware commands with the corresponding firmware group.

During operation whenever a command is issued to security firmware, the currently loaded first firmware group 33B is checked against the firmware group that is required to execute the requested command. This check may be performed by using the command mapping LUT 34 to identify a group index value for the requested command and then compare the identified group index value with the index value of the currently loaded firmware group 33A. If the currently loaded firmware group 33A is different from the group index value for the requested command, then the image manager will perform a group swapping process 39 to replace the currently loaded first firmware group 33B with the requested group (e.g., 31E). In order to authenticate, decrypt and download the requested second firmware group 31E, the integrity check value ICV of the requested firmware group is calculated using an internal key and compared with the corresponding firmware ICV values 36A-D stored in the key image 36 of the secure memory 33. As disclosed herein, the swapping of individual firmware groups (e.g., Group 1, Group 2, Group 3) is supported by storing firmware ICV values 36A-D in data storage 35 of secure memory 32. In particular, the first ICV_A value 36A is the authentication check value for the encrypted firmware base group 31A and encrypted first firmware group 31B. And in support of swapping out individual firmware groups, the second ICV_1 value 36B is the authentication check value for the encrypted first firmware group 31B, the third ICV_2 value 36C is the authentication check value for the encrypted second firmware group 31E, and the third ICV_3 value 36D is the authentication check value for the encrypted third firmware group (not shown). If the ICVs match, the requested firmware group content (e.g., 31E) is decrypted and loaded in-place in the firmware image 33 of secure memory 32 to replace the first firmware group 33B. In addition, a current group variable identifier 37 in data storage 35 is updated or set to the new group index value for the requested firmware group.

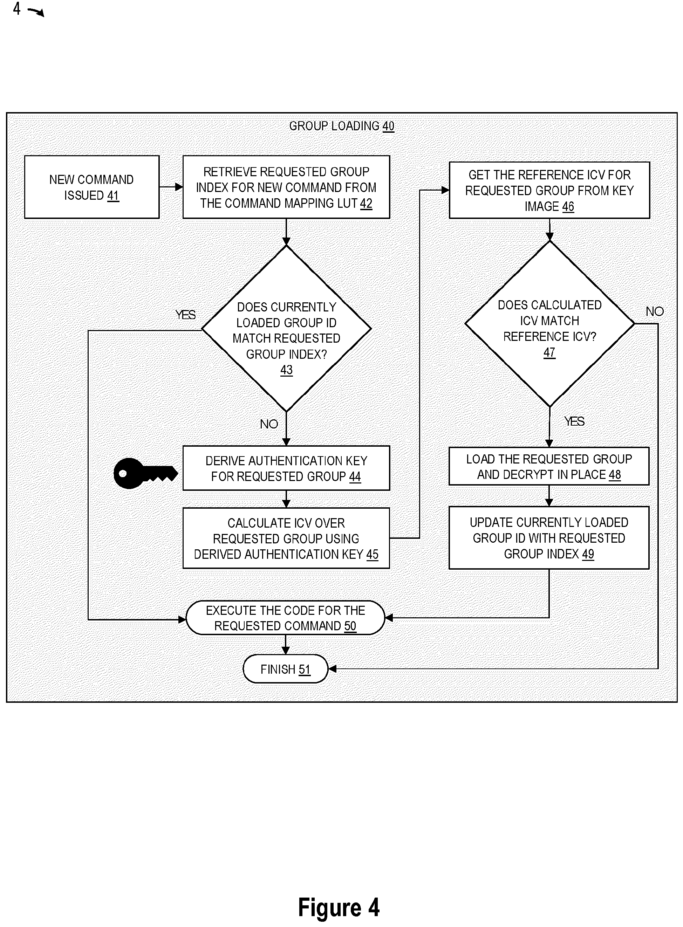

To provide additional details for an improved understanding of selected embodiments of the present disclosure, reference is now made to Figure 4 which depicts a simplified flow chart 4 showing an example logic for a secure group loading process 40 that may be executed by a security engine or other subsystem to selectively load grouped firmware from external memory (e.g., ROM) onto a memory-constrained device after ensuring the confidentiality and authenticity of an identified code group. In the depicted group loading process 40, the secure memory has already been loaded with a base firmware group and first or initial firmware group to cover the most commonly-used firmware functionalities. Upon issuance of a new security firmware command (step 41), the security engine or image manager retrieves a requested group index value for the new command using the command mapping lookup table at step 42, thereby identifying which firmware group is needed to support the new command.

At comparison step 43, the security engine or image manager compares the requested group index value with the currently loaded group ID value which identifies the currently loaded firmware group. If there is a match (affirmative outcome to comparison step 43), then the requested command can be serviced by the currently loaded firmware group, and the code for the requested command is executed by the security engine at step 50. However, if there is not a match (negative outcome to comparison step 43), then the security engine must authenticate and download the requested firmware group from the external memory to replace or swap with the first/initial firmware group. To this end, the security engine starts by deriving the authentication key (a.k.a., CMAC key) for the requested firmware group at step 44. In addition, the security engine uses the derived authentication key to calculate an Integrity Check Value (ICV) for the requested firmware group at step 45. In addition, the security engine retrieves a reference ICV for the requested firmware group that is stored in persistent security memory of the security engine (e.g., key image data storage) at step 46.

At comparison step 47, the security engine or image manager compares the retrieved reference ICV value (from step 46) with the calculated ICV value (from step 45) for the requested firmware group. If there is a match (affirmative outcome to comparison step 47), the requested firmware group is authenticated, and the security engine or image manager can load the requested firmware group and decrypt in place for storage in the secure memory to replace the first/initial firmware group at step 48. If there is not a match (negative outcome to comparison step 47), then the requested firmware group is not authenticated, and the group loading process ends (finish step 51). Once the first/initial firmware group is replaced with the requested firmware group, the security engine or image manager updates information identifying the currently loaded group to reflect that the requested firmware group is now currently loaded in secure memory at step 49, and the code for the requested command may be executed by the security engine at step 50 before the group loading process ends (finish step 51). As will be appreciated, the first firmware group can be loaded again if the requested command requires a function from the first firmware group.

A system, method, and apparatus are provided for securely controlling operations of a data processing system in which security subsystem is activated to provide security services. Initially, a security firmware base code group and a security firmware first code group are downloaded from a multi-group security firmware image stored on external memory for storage at a secure memory in the security subsystem. If the security firmware first code group does not support a received security service command request, a security firmware second code group is retrieved from the multi-group security firmware image a run-time swap of the security firmware second code group is performed to replace the security firmware first code group in the secure memory in the security subsystem so that the security subsystem can generate a response to the security service command request using at least the security firmware second code group.

By now it should be appreciated that there has been provided an apparatus, method, program code, and system for securely controlling operations of a data processing system which includes a security subsystem and one more application subsystems. As disclosed, the security subsystem is activated to provide security services by downloading, from a multi-group security firmware image stored on external memory, a security firmware base code group and a security firmware first code group for storage at a secure memory in the security subsystem. In selected embodiments, the security subsystem is activated by initializing a hardware security engine during bootup of the data processing system. In such embodiments, the external memory may be an external flash memory connected to the data processing system which stores the multi-group security firmware image which includes an encrypted security firmware base code group, an encrypted security firmware first code group, and at least an encrypted security firmware second code group. Subsequently, the security subsystem receives a security service command request from an application subsystem. Upon evaluating the security service command request, the security subsystem determines whether the security firmware first code group supports the security service command request. In selected embodiments, the security subsystem determines whether the security firmware first code group supports the security service command request by accessing a command mapping lookup table to retrieve the group index value corresponding to the security service command request; and comparing the group index value to a current code group index value identifying a security firmware code group currently stored in the secure memory. When the group index value does not match the current code group index, the security subsystem retrieves a security firmware code group according to the group index value from the multi-group security firmware image stored on external memory. In selected embodiments, security subsystem retrieves the security firmware second code group by authenticating the security firmware second code group using an integrity check value for the security firmware second code group that is stored in secure memory in the security subsystem; and loading the authenticated security firmware second code group and decrypting in place for storage in the secure memory of the security subsystem to replace the security firmware first code group. Subsequently, the security subsystem performs a run-time swap of the security firmware second code group to replace the security firmware first code group in the secure memory in the security subsystem, and then generates a response to the security service command request using the security firmware second code group. In selected embodiments, the security firmware base code group includes an image manager and a first predetermined set of minimum firmware features, the security firmware first code group includes a second predetermined set of different firmware features, and the security firmware second code group includes a third predetermined set of different firmware features. In other selected embodiments, the multi-group security firmware image is stored on external read only memory to include the security firmware base code group, security firmware first code group, and security firmware second code group that are chained together using a first initialization vector and a plurality of integrity check values computed, respectively from the security firmware base code group, security firmware first code group, and security firmware second code group.

In another form, there is provided a data processing system and associated method of securely controlling operations thereof. The disclosed data processing system includes an application subsystem coupled to a bus for executing instructions to issue a security service command request. In addition, the data processing system includes an external memory, such as an external flash memory or read only memory, coupled to the bus for storing a multi-code group firmware image. In selected embodiments, the multi-code group firmware image stored on external memory includes an encrypted security firmware base code group, an encrypted security firmware first code group, and at least an encrypted security firmware second code group. The data processing system also includes a security subsystem coupled to the bus to provide a security service in response to the security service command request. As disclosed, the security subsystem includes a secure memory for storing a base code group and currently loaded code group. In selected embodiments, the base code group may include an image manager and a first predetermined set of minimum firmware features; the currently loaded code group may include a second predetermined set of different firmware features; and the second code group may include a third predetermined set of different firmware features. In other selected embodiments, the multi-code group firmware image stored on external read only memory may include the security firmware base code group, security firmware first code group, and security firmware second code group that are chained together using a first initialization vector and a plurality of integrity check values computed, respectively from the security firmware base code group, security firmware first code group, and security firmware second code group. In addition, the disclosed security subsystem includes group loading control logic configured to retrieve a second code group from the multi-code group firmware image stored on external memory and to perform a run-time swap of second code group to replace the currently loaded code group in the secure memory when the currently loaded code group does not support the security service command request. In selected embodiments, the group loading control logic is configured to receive the security service command request from the application subsystem; to determine whether the currently loaded code group supports the security service command request; to retrieve the second code group from the multi-code group firmware image stored on external memory when the currently loaded code group does not support the security service command request; to perform a run-time swap of the second code group to replace the currently loaded code group in the secure memory in the security subsystem; and to generate a response to the security service command request using at least the second code group. In selected embodiments, the group loading control logic may be configured to retrieve the second code group from the multi-code group firmware image by authenticating the second code group using an integrity check value for the second code group that is stored in secure memory in the security subsystem; and loading the authenticated second code group and decrypting in place for storage in the secure memory of the security subsystem to replace the first code group. In selected embodiments, the group loading control logic may be configured to determine whether the currently loaded code group supports the security service command request by accessing a command mapping lookup table to retrieve a group index value corresponding to the security service command request; and comparing the group index value to a current code group index value identifying the currently loaded code group stored in the secure memory. In addition, the group loading control logic may be configured to activate the security subsystem during bootup by authentication, decrypting, and downloading, from the multi-code group firmware image stored on external memory, the encrypted security firmware base code group and the encrypted security firmware first code group for storage in the secure memory as the base code group and the currently loaded code group.

In yet another form, there is provided a secure method for a computer with a plurality of application subsystems, a hardware security subsystem, and external memory, such as a read only memory or flash memory, which stores a multi-code group firmware image. In selected embodiments, the multi-code group firmware image includes an encrypted security firmware base code group comprising an image manager and a first predetermined set of minimum firmware features; an encrypted security firmware first code group comprising second predetermined set of different firmware features; and at least an encrypted security firmware second code group comprising a third predetermined set of different firmware features. In the disclosed secure method, the hardware security subsystem is initialized during bootup of a data processing system to store a base code group and default code group in secure memory. Once initialized, the hardware security subsystem receives a security service request from a first application subsystem. In addition, the hardware security subsystem evaluates the security service request to determine whether the security service request is supported by the default code group. In addition, the hardware security subsystem retrieves and authenticates a replacement code group from a multi-code group firmware image stored on external memory to perform a run-time exchange in the secure memory of the default code group with the replacement code group when the default code group does not support the security service request. In addition, the hardware security subsystem generates a response to the security service request using at least the replacement code group. In selected embodiments, the disclosed secure method also receives a second security service request at the hardware security subsystem; evaluates the second security service request at the hardware security subsystem to determine whether the second security service request is supported by the replacement code group; retrieves and authenticates an alternative replacement code group from a multi-code group firmware image stored on external memory to perform a run-time exchange in the secure memory of the replacement code group with the alternative replacement code group when the replacement code group does not support the second security service request; and generates a response to the second security service request using at least the alternative replacement code group.

Although the described exemplary embodiments disclosed herein focus on a data processing SoC security subsystem which dynamically and securely adjusts firmware functionality loaded into secure memory from a grouped firmware image stored in external flash memory, the present invention is not necessarily limited to the example embodiments illustrate herein and may be applied to any security system that may dynamically meet firmware needs by selectively loading required firmware coding groups into memory constrained storage of a data processing subsystem. Thus, the particular embodiments disclosed above are illustrative only and should not be taken as limitations upon the present invention, as the invention may be modified and practiced in different but equivalent manners apparent to those skilled in the art having the benefit of the teachings herein. Accordingly, the foregoing description is not intended to limit the invention to the particular form set forth, but on the contrary, is intended to cover such alternatives, modifications and equivalents as may be included within the spirit and scope of the invention as defined by the appended claims so that those skilled in the art should understand that they can make various changes, substitutions and alterations without departing from the spirit and scope of the invention in its broadest form.

It should also be noted that at least some of the operations for the methods described herein may be implemented in whole or in part with hardware and/or software instructions stored on a computer useable storage medium for execution by a computer. As an example, an embodiment of a computer program product includes a non-transitory, computer useable storage medium to store a computer readable program. The computer-useable or computer-readable storage medium can be an electronic, magnetic, optical, electromagnetic, infrared, or semiconductor system (or apparatus or device). Examples of non-transitory computer-useable and computer-readable storage media include a semiconductor or solid-state memory, magnetic tape, a removable computer diskette, a random access memory (RAM), a read-only memory (ROM), a rigid magnetic disk, and an optical disk. Current examples of optical disks include a compact disk with read only memory (CD-ROM), a compact disk with read/write (CD-R/W), and a digital video disk (DVD). Alternatively, embodiments of the disclosure may be implemented entirely in hardware or in an implementation containing both hardware and software elements. In embodiments which use software, the software may include but is not limited to firmware, resident software, microcode, etc.

Benefits, other advantages, and solutions to problems have been described above with regard to specific embodiments. However, the benefits, advantages, solutions to problems, and any element(s) that may cause any benefit, advantage, or solution to occur or become more pronounced are not to be construed as a critical, required, or essential feature or element of any or all the claims. As used herein, the terms "comprises," "comprising," or any other variation thereof, are intended to cover a non-exclusive inclusion, such that a process, method, article, or apparatus that comprises a list of elements does not include only those elements but may include other elements not expressly listed or inherent to such process, method, article, or apparatus.

## Claims

1. A method for securely controlling operations of a data processing system, comprising:
activating a security subsystem to provide security services by downloading, from a multi-group security firmware image stored on external memory, a security firmware base code group and a security firmware first code group for storage at a secure memory in the security subsystem;
receiving, at the security subsystem, a security service command request from an application subsystem;
determining, by the security subsystem, if the security firmware first code group supports the security service command request;
retrieving, by the security subsystem, a security firmware second code group from the multi-group security firmware image stored on external memory when the security firmware first code group does not support the security service command request;
performing, by the security subsystem, a run-time swap of the security firmware second code group to replace the security firmware first code group in the secure memory in the security subsystem; and
generating, at the security subsystem, a response to the security service command request using at least the security firmware second code group.

2. The method of claim 1, where activating the security subsystem comprises initializing a hardware security engine during bootup of the data processing system.

3. The method of claim 2, where the external memory comprises an external flash memory connected to the data processing system which stores the multi-group security firmware image comprising an encrypted security firmware base code group, an encrypted security firmware first code group, and at least an encrypted security firmware second code group.

4. The method of any preceding claim, where the security subsystem determines that the security firmware first code group supports the security service command request by:
accessing a command mapping lookup table to retrieve a group index value corresponding to the security service command request; and
comparing the group index value to a current code group index value identifying a security firmware code group currently stored in the secure memory.

5. The method of any preceding claim, where the security subsystem retrieves the security firmware second code group from the multi-group security firmware image stored on external memory by:
authenticating the security firmware second code group using an integrity check value for the security firmware second code group that is stored in secure memory in the security subsystem; and
loading the authenticated security firmware second code group and decrypting in place for storage in the secure memory of the security subsystem to replace the security firmware first code group.

6. The method of any preceding claim, where the security firmware base code group comprises an image manager and a first predetermined set of minimum firmware features, where the security firmware first code group comprises a second predetermined set of different firmware features, and where the security firmware second code group comprises a third predetermined set of different firmware features.

7. The method of any preceding claim, where the multi-group security firmware image is stored on external read only memory to include the security firmware base code group, security firmware first code group, and security firmware second code group that are chained together using a first initialization vector and a plurality of integrity check values computed, respectively from the security firmware base code group, security firmware first code group, and security firmware second code group.

8. A data processing system comprising:
a bus;
an application subsystem coupled to the bus for executing instructions to issue a security service command request;
an external memory coupled to the bus for storing a multi-code group firmware image; and
a security subsystem coupled to the bus to provide a security service in response to the security service command request, where the security subsystem comprises:
a secure memory for storing a base code group and currently loaded code group, and
group loading control logic configured to retrieve a second code group from the multi-code group firmware image stored on external memory and to perform a run-time swap of second code group to replace the currently loaded code group in the secure memory when the currently loaded code group does not support the security service command request.

9. The data processing system of claim 8, where the group loading control logic is configured to:
receive the security service command request from the application subsystem;
determine whether the currently loaded code group supports the security service command request;
retrieve the second code group from the multi-code group firmware image stored on external memory when the currently loaded code group does not support the security service command request;
perform a run-time swap of the second code group to replace the currently loaded code group in the secure memory in the security subsystem; and
generate a response to the security service command request using at least the second code group.

10. The data processing system of claim 8 or 9, where the security subsystem is configured to generate a response to the security service command request using at least the second code group.

11. The data processing system of any of claims 8 to 10, where the external memory comprises an external flash memory or read only memory coupled over the bus to the data processing system.

12. The data processing system of claim 11, where the multi-code group firmware image stored on external memory comprises an encrypted security firmware base code group, an encrypted security firmware first code group, and at least an encrypted security firmware second code group.

13. The data processing system of claim 12, where the group loading control logic is configured to activate the security subsystem during bootup by authentication, decrypting, and downloading, from the multi-code group firmware image stored on external memory, the encrypted security firmware base code group and the encrypted security firmware first code group for storage in the secure memory as the base code group and the currently loaded code group.

14. The data processing system of any of claims 9 to 13, where the group loading control logic is configured to determine whether the currently loaded code group supports the security service command request by:
accessing a command mapping lookup table to retrieve a group index value corresponding to the security service command request; and
comparing the group index value to a current code group index value identifying the currently loaded code group stored in the secure memory.

15. The data processing system of any of claims 8 to 14, where the group loading control logic is configured to retrieve the second code group from the multi-code group firmware image by:
authenticating the second code group using an integrity check value for the second code group that is stored in secure memory in the security subsystem; and
loading the authenticated second code group and decrypting in place for storage in the secure memory of the security subsystem to replace the first code group.
